# EUROPÄISCHE PATENTSCHRIFT

(11) **EP 2 553 789 B1**
(45) Veröffentlichungstag und Bekanntmachung des Hinweises auf die Patenterteilung: **28.06.2017**
(21) Anmeldenummer: 11711314.2
(22) Anmeldetag: 24.03.2011
(51) Int. Cl.: H02J 7/14, F02N 11/08

(54) **BORDNETZ FÜR EIN FAHRZEUG SOWIE STEUERVORRICHTUNG ZUR SPANNUNGSSTABILISIERUNG FÜR EIN BORDNETZ**
VEHICLE ELECTRICAL CIRCUIT AND CONTROL DEVICE FOR STABILISING ITS VOLTAGE
CIRCUIT ÉLECTRIQUE DE VÉHICULE ET DISPOSITIF DE COMMANDE POUR STABILISER SA TENSION

(30) Priorität: 30.03.2010 DE 102010013454
(43) Veröffentlichungstag der Anmeldung: 06.02.2013
(73) Patentinhaber: Continental Automotive GmbH, 30165 Hannover (DE)
(72) Erfinder: REICHOW, Dirk, 93173 Wenzenbach (DE); STECKERMEIER, Tobias, 93059 Regensburg (DE); KNORR, Rainer, 93055 Regensburg (DE)
(86) Internationale Anmeldenummer: PCT/EP2011/054552
(87) Internationale Veröffentlichungsnummer: WO 2011/120871

(56) Entgegenhaltungen:
- EP-A1- 2 053 720
- EP-A1- 2 079 147
- EP-A1- 2 154 359
- DE-A1-102006 037 699
- FR-A1- 2 924 536

## Beschreibung

Die Erfindung betrifft ein Bordnetz für ein Fahrzeug und eine Steuervorrichtung zur Spannungsstabilisierung für ein Bordnetz eines Fahrzeugs. Ferner betrifft die Erfindung ein Fahrzeug, insb. ein Kraftfahrzeug mit einem oben genannten Bordnetz oder einer oben genannten Steuervorrichtung.

Bordnetze heutiger Kraftfahrzeuge umfassen einen als Drehstrommaschine mit einer nachgeschalteten Gleichrichterschaltung ausgebildeten Generator als Energiewandler, einen ersten Energiespeicher, bspw. Batterie sowie zumindest einen über das Bordnetz zu versorgenden elektrischen Energieverbraucher bzw. Stromverbraucher als Systemlast, wobei der Generator, der erste Energiespeicher und die Systemlast ein erstes Energiesystem ausbilden.

Darüber hinaus sind auch Bordnetze mit einem zweiten Energiespeicher als ein weiteres also ein zweites Energiesystem bekannt, wobei dieser zweite Energiespeicher in der Regel aus einem oder mehreren Kondensatoren insb. Doppelschichtkondensatoren ausgebildet ist und als zusätzlicher Stromlieferant im Bordnetz dient, bspw. in den Fällen wie beim Motorstart, wenn die erste Energiequelle, sprich der Generator und der erste Energiespeicher den Strombedarf der Systemlast allein nicht bewältigen können, siehe FR2924536A. In der Regel weisen die ersten und zweiten Energiesysteme unterschiedliche Betriebsspannungen als Systemspannungen auf. Je nach Ausgestaltungen können das erste und zweite Energiesystem voneinander bzw. von der Systemlast potentialgetrennt aber auch nicht potentialgetrennt ausgeführt sein.

In Betriebszuständen, in denen der Strombedarf durch wenige geschlossenen Stromverbraucher nicht das von dem Generator und/oder Energiespeicher bereitgestellte Stromangebot übersteigt und weitgehend stabil bleibt, wird die Systemlast von dem Generator und dem ersten Energiespeicher mit dem elektrischen Strom versorgt.

In einem Bordnetz ist es sehr wichtig, einen weitgehend sicheren Systemzustand (auf Englisch: Safe-State) des Bordnetzes zu erhalten. Ein sicherer Systemzustand bedeutet, dass im Bordnetz eine zu einem einwandfreien Betrieb der Systemlast minimal erforderliche Betriebsbedingung herrscht.

In den Fällen, in denen der Strombedarf im Bordnetz durch zusätzlich an das Bordnetz angeschlossene bzw. zuschaltete leistungsstarke Stromverbraucher wie Anlasser zum Starten des Verbrennungsmotors, welche viel Strom verbrauchen, in kurzer Zeit sprungartig über die Belastungsgrenze des ersten Energieversorgungssystems, sprich des Generators und des ersten Energiespeichers, hinaus ansteigt, besteht die Gefahr, dass die Bordnetzspannung unkontrolliert abstürzt.

Eine erste Anforderung bei der Einhaltung eines sicheren Systemzustandes im Bordnetz ist es somit, beim Zuschalten eines oder mehrerer leistungsstarken Stromverbrauchers die Bordnetzspannung weiterhin auf eine für eine einwandfreie Funktion aller Stromverbraucher also der Systemlast minimal erforderliche Betriebsspannung zu halten.

Die Schalter, welche die Energiespeicher mit der Systemlast elektrisch verbinden, können unkontrolliert geöffnet oder unerwartet hochimpedant werden. als Folge bricht die Stromversorgung von der Systemlast durch die Energiespeicher. Bricht bspw. die Stromversorgung der Systemlast durch den ersten Energiespeicher weg, so übersteigt der Strombedarf das zur Verfügung stehende Stromangebot und fällt demzufolge die Bordnetzspannung unter die minimal erforderliche Betriebsspannung ab. Folglich kann der sichere Systemzustand nicht mehr aufrecht erhalten werden.

Deshalb ist es eine weitere Anforderung bei der Einhaltung eines sicheren Systemzustandes im Bordnetz, beim Eintreten eines Systemfehlers im Bordnetz die Bordnetzspannung weiterhin auf eine für eine einwandfreie Funktion aller Stromverbraucher also der Systemlast minimal erforderliche Betriebsspannung zu halten.

Die Aufgabe der vorliegenden Erfindung liegt somit darin, das eingangs genannte Bordnetz bzw. die eingangs genannte Steuervorrichtung so zu modifizieren, dass das Bordnetz beim Zuschalten von zusätzlichen Stromverbrauchern oder beim Eintreten eines oben genannten Systemfehlers weiterhin in einem sicheren Systemzustand aufrecht erhalten werden kann.

Diese Aufgabe wird durch die unabhängigen Ansprüche gelöst. Vorteilhafte Ausgestaltungen sind Gegenstand der Unteransprüche.

Gemäß einem ersten Aspekt der Erfindung wird ein Bordnetz geschaffen, welches einen ersten und einen zweiten Strompfad umfasst.

Der erste Strompfad umfasst die Systemlast, also zumindest einen Stromverbraucher bzw. Energieverbraucher, einen ersten Energiespeicher zum Bereitstellen elektrischen Stromes also elektrischer Energie für die Systemlast, und einen ersten steuerbaren Schalter. In einem geschlossenen Zustand verbindet der erste Schalter die Systemlast mit dem ersten Energiespeicher elektrisch und in einem geöffneten Zustand trennt dieser die elektrische Verbindung vom ersten Energiespeicher zur Systemlast. Damit dient der erste Schalter dazu, im geschlossenen Zustand einen Stromfluss im ersten Strompfad herzustellen bzw. im geöffneten Zustand diesen Stromfluss zu unterbinden.

Der zweite Strompfad umfasst die oben genannte Systemlast, den oben genannten ersten und einen zweiten Energiespeicher sowie einen zweiten steuerbaren Schalter. In einem geschlossenen Zustand verbindet der zweite Schalter den zweiten Energiespeicher mit der Systemlast und dem ersten Energiespeicher elektrisch und in einem geöffneten Zustand trennt dieser den zweiten Energiespeicher von der Systemlast und vom zweiten Energiespeicher elektrisch. Damit dient der zweite Schalter dazu, im geschlossenen Zustand einen Stromfluss im zweiten Strompfad herzustellen bzw. im geöffneten Zustand diesen Stromfluss zu unterbinden.

Das Bordnetz umfasst ferner eine Steuervorrichtung, welche ihrerseits eine Überwachungseinheit zum Überwachen des Systemzustands des Bordnetzes, insb. des Schaltzustands und der Funktionalität des ersten Schalters, und eine erste Steuereinheit, welche mit einem ersten Steuersignal den zweiten Schalter steuert, aufweist.

Die Überwachungseinheit, welche aufgrund derer Funktion zum Vergleichen zweier Werte auch als Vergleichseinheit bezeichnet werden kann, erfasst einen ersten auf den Bordnetzstrom bezogenen Bordnetzparameter, insb. eine Bordnetzspannung, und vergleicht den aktuell erfassten ersten Bordnetzparameterwert mit einem ersten vorgegebenen Schwellwert. Erkennt die Überwachungseinheit basierend auf das Vergleichsergebnis der beiden Werte, dass der sichere Systemzustand nicht gehalten werden kann und somit das Bordnetz abzustürzen droht, so gibt diese ein Signal mit einem entsprechenden Signalpegel an die erste Steuereinheit aus.

Abhängig von dem Signal der Überwachungseinheit, somit abhängig vom aktuell erfassten ersten Bordnetzparameterwert im Vergleich mit dem ersten Schwellwert, setzt die erste Steuereinheit das erste Steuersignal auf einen vorab definierten Signalpegel und schließt so den zweiten Schalter und hält diesen im geschlossenen Schaltzustand. Durch Schließen des zweiten Schalters wird der zweite Strompfad vom ersten Energiespeicher über den zweiten Energiespeicher zur Systemlast hergestellt.

So ist ein Bordnetz geschaffen, welches beim Zuschalten von zusätzlichen leistungsstarken Stromverbrauchern oder beim Eintreten eines Systemfehlers weiterhin in einem sicheren Systemzustand aufrecht erhalten werden kann.

In einer vorteilhaften Ausgestaltung der Erfindung erfasst die Überwachungseinheit einen zweiten Bordnetzparameter, insb. einen Bordnetzstrom, und vergleicht den aktuell erfassten zweien Bordnetzparameterwert mit einem vorgegebenen zweiten Schwellwert. Die erste Steuereinheit schließt dann den zweiten Schalter bzw. hält den zweiten Schalter in einem geschlossenen Schaltzustand in Abhängigkeit von dem aktuell erfassten zweiten Bordnetzparameterwert im Vergleich mit dem zweiten Schwellwert.

Also die erste Steuereinheit schließt den zweiten Schalter bzw. hält den zweiten Schalter in einem geschlossenen Schaltzustand dann, wenn sowohl das Vergleichsergebnis des ersten Bordnetzparameterwertes mit dem ersten Schwellwert also auch das Vergleichsergebnis des zweiten Bordnetzparameterwertes mit dem zweiten Schwellwert auf einen drohenden Bordnetzabsturz aufgrund der hinzugeschalteten Stromverbraucher oder eines Systemfehlers hindeutet.

Dies hat den Vorteil, dass die unbedenklichen Systemzustände, in denen nur ein Bordnetzparameter vorübergehend schwankt, einfachweise von den Systemzuständen mit einem drohenden Bordnetzabsturz unterschieden werden können.

In einer weiteren vorteilhaften Ausgestaltung der Erfindung steuert die erste Steuereinheit den ersten und zweiten Schalter mit einem und demselben ersten Steuersignal. Dabei betätigt die erste Steuereinheit mit demselben ersten Steuersignal den ersten und den zweiten Schalter zeitgleich und zueinander gegensinnig. Ein "gegensinniges" Betätigen bedeutet in dieser Erfindung, dass der eine Schalter geschlossen bzw. in einem geschlossenen Zustand gehalten wird während der andere zeitgleich geöffnet bzw. in einem geöffneten Zustand gehalten wird.

Zur gegensinnigen Steuerung der beiden Schalter weist die Steuervorrichtung in der Signalleitung zwischen der ersten Steuereinheit und einem der beiden Schalter einen Inverter auf, welcher das erste Steuersignal von der ersten Steuereinheit stets invertiert an den einen Schalter weiterleitet.

Dadurch können die beiden Schalter mit nur einem Steuersignal synchron und gegensinnig angesteuert werden und weitere Steuereinheiten können so gespart werden.

In einer weiteren vorteilhaften Ausgestaltung weist die Steuervorrichtung eine zweite Steuereinheit, wobei die zweite Steuereinheit bei Vorliegen eines weiteren Signals von der Überwachungseinheit, welches auf einen Systemfehler im Bordnetz hindeutet, den zweiten Schalter unabhängig von dem ersten Steuersignal der ersten Steuereinheit steuert. Dieses weitere Signal erzeugt die Überwachungseinheit abhängig vom Vergleichsergebnis des ersten Bordnetzparameters mit dem ersten Schwellwert und/oder vom Vergleichsergebnis des zweiten Bordnetzparameters dem zweiten Schwellwert.

Dadurch kann der zweite Schalter beim Auftreten eines Systemfehlers im Bordnetz unabhängig von der ersten Steuereinheit sicher geschlossen bzw. im geschlossenen Schaltzustand gehalten werden. Dies hat den Vorteil, dass die wenig bedenklichen Systemzustände, in denen die Bordnetzspannung durch Zuschalten eines leistungsstarken Stromverbrauchers vorübergehend schwankt, einfachweise von den fehlerhaften Systemzuständen unterschieden werden können, in denen der Stromfluss vom ersten Energiespeicher zu der Systemlast mit dem ersten Schalter nicht mehr hergestellt werden kann.

In noch einer weiteren vorteilhaften Ausgestaltung weist die Steuervorrichtung eine dritte Steuereinheit auf, wobei diese dritte Steuereinheit zwischen dem zweiten Schalter und den beiden ersten und zweiten Steuereinheiten zwischengeschaltet ist und abhängig von den Signalpegeln der ersten und der zweiten Steuersignale entweder das erste oder das zweite Steuersignal an den zweiten Schalter weiterleitet. Vorteilhafterweise ist die dritte Steuereinheit als ein steuerbares Oder-Gatter ausgebildet.

Dies hat den Vorteil, dass der zweite Schalter sowohl im fehlerfreien, als auch im fehlhaften Systemzustand von einer der beiden ersten und zweiten Steuereinheit gesteuert werden kann, ohne dabei der Übergang von einem fehlerfreien zu einem fehlerhaften Systemzustand oder umgekehrt durch Änderungen bei den Komponenten der Steuervorrichtung angepasst werden muss.

In einer alternativen Ausgestaltung können die Überwachungseinheit und die zweite Steuereinheit in einem Modul ausgeführt sein, wobei die Überwachungseinheit das zweite Steuersignal direkt an die dritte Steuereinheit ausgibt. Dadurch wird die zweite Steuereinheit gespart.

Gemäß einem weiteren Aspekt der Erfindung wird eine Steuervorrichtung für ein Bordnetz geschaffen.

Die Steuervorrichtung weist vier elektrische Anschlüsse auf, mit denen die Steuervorrichtung nach dem Einbau in einem Bordnetz mit dem Bordnetz bzw. mit den Strompfaden im Bordnetz elektrisch verbunden wird. Ferner weist die Steuervorrichtung zwischen dem ersten und dem zweiten Anschluss einen ersten steuerbaren Schalter und zwischen dem ersten und dem dritten Anschluss einen zweiten steuerbaren Schalter. In einem geschlossenen Schaltzustand verbindet der erste Schalter den ersten Anschluss mit dem zweiten Anschluss elektrisch bzw. in einem geöffneten Schaltzustand trennt dieser die elektrische Verbindung zwischen dem ersten und dem zweiten Anschluss. Analog verbindet der zweite Schalter in einem geschlossenen Schaltzustand den ersten Anschluss mit dem dritten Anschluss elektrisch bzw. in einem geöffneten Schaltzustand trennt dieser die elektrische Verbindung zwischen dem ersten und dem dritten Anschluss. Die Steuervorrichtung weist zudem eine Überwachungseinheit zum Überwachen des Systemzustands des Bordnetzes, insb. des Schaltzustands und/oder der Funktionalität des ersten Schalters, sowie eine erste Steuereinheit zum Bereitstellen eines Steuersignals auf, mit dem der zweite Schalter gesteuert wird.

Die Überwachungseinheit erfasst über den vierten Anschluss einen ersten strombezogenen Bordnetzparameter, insb. eine Bordnetzspannung als Potentialdifferenz zwischen einem Spannungspotential am vierten Anschluss und dem Massepotential, und vergleicht den aktuell erfassten ersten Bordnetzparameterwert mit einem ersten vorgegebenen Schwellwert. Abhängig von dem Vergleichsergebnis gibt die Überwachungseinheit ein Signal an die erste Steuereinheit aus. Die erste Steuereinheit steuert dann abhängig vom Signal von der Überwachungseinheit bzw. abhängig vom aktuell erfassten ersten Bordnetzparameterwert im Vergleich mit dem ersten Schwellwert den zweiten Schalter.

Gemäß einer vorteilhaften Ausgestaltung erfasst die Überwachungseinheit einen zweiten strombezogenen Bordnetzparameter, in dem diese einen Strompegel eines zwischen dem ersten und dem zweiten Anschlüssen fließenden Stromes misst, und vergleicht den aktuell erfassten, zweiten Bordnetzparameterwert mit einem zweiten vorgegebenen Schwellwert. Abhängig von dem Vergleichsergebnis des ersten Bordnetzparameterwertes mit dem ersten Schwellwert und dem Vergleichsergebnis des zweiten Bordnetzparameterwertes mit dem zweiten Schwellwert gibt die Überwachungseinheit dann das Signal an die erste Steuereinheit aus. Die erste Steuereinheit steuert in diesem Fall abhängig von den beiden Vergleichsergebnissen den zweiten Schalter.

Gemäß einer weiteren vorteilhaften Ausgestaltung steuert die erste Steuereinheit den ersten und zweiten Schalter mit einem und demselben ersten Steuersignal zeitgleich und gegensinnig.

Gemäß einer weiteren vorteilhaften Ausgestaltung weist die Steuervorrichtung in der Signalleitung zwischen der ersten Steuereinheit und einem der beiden Schalter einen Inverter auf, wobei der Inverter das erste Steuersignal von der ersten Steuereinheit stets invertiert an den einen Schalter weiterleitet.

Gemäß einer weiteren vorteilhaften Ausgestaltung weist die Steuervorrichtung eine zweite Steuereinheit, wobei die zweite Steuereinheit bei Vorliegen eines weiteren Signals von der Überwachungseinheit, welches auf einen Systemfehler im Bordnetz hindeutet, den zweiten Schalter unabhängig von dem ersten Steuersignal der ersten Steuereinheit steuert. Dieses weitere Signal erzeugt die Überwachungseinheit ebenfalls in Abhängigkeit vom Vergleichsergebnis des ersten Bordnetzparameters mit dem ersten Schwellwert und/oder vom Vergleichsergebnis des zweiten Bordnetzparameters dem zweiten Schwellwert. Deuten die beiden Vergleichsergebnisse auf einen Systemfehler im Bordnetz hin, so gibt die zweite Steuereinheit ein zweites Steuersignal aus bzw. setzt dieses zweite Steuersignal auf einen bestimmten Signalpegel und schließt so den zweiten Schalter unabhängig vom Schaltzustand des ersten Schalters bzw. hält diesen zweiten Schalter in einem geschlossenen Schaltzustand.

Hierzu weist die Steuervorrichtung vorteilhafterweise eine dritte Steuereinheit auf, wobei diese dritte Steuereinheit zwischen dem zweiten Schalter und den beiden ersten und zweiten Steuereinheiten zwischengeschaltet ist und abhängig von den Vergleichsergebnissen der Überwachungseinheit entweder das erste oder das zweite Steuersignal an den zweiten Schalter weiterleitet. Vorteilhafterweise ist die dritte Steuereinheit als ein steuerbares Oder-Gatter ausgebildet.

So ist eine Steuervorrichtung zum Steuern von Stromfluss im Bordnetz geschaffen, welche auch Systemfehler im Bordnetz zuverlässig erkennen kann und zudem nur mit wenigen Bauelementen auch einfach und günstig herstellbar ist.

Gemäß einem weiteren Aspekt der vorliegenden Erfindung wird ein Fahrzeug, insb. ein Kraftfahrzeug, mit einem oben beschriebenen Bordnetz oder einer oben beschriebenen Steuervorrichtung geschaffen.

Vorteilhafte Ausgestaltungen des oben dargestellten Bordnetzes sind, soweit im Übrigen auf die oben beschriebene Steuervorrichtung bzw. auf das oben genannte Fahrzeug übertragbar, auch als vorteilhafte Ausgestaltungen der Steuervorrichtung bzw. des Fahrzeugs anzusehen.

Im Folgenden wird die Erfindung anhand eines Ausführungsbeispiels unter Zuhilfenahme von Figuren näher erläutert. Als Ausführungsbeispiel dient ein Bordnetz eines Fahrzeugs. In den Figuren sind lediglich die Komponenten eines Bordnetzes darstellt, welche zur Beschreibung der Erfindung unerlässlich sind. Je nach Ausführung kann das Bordnetz weitere Komponenten aufweisen, welche hier aber zur vereinfachten Beschreibung der Erfindung nicht näher dargestellt werden.

Es zeigen:
Figur 1 in einer vereinfachten schematischen Darstellung ein Bordnetz eines Fahrzeugs in einem Blockschaltbild;
Figur 2 in einer detailierten schematischen Darstellung das Bordnetz gemäß Figur 1 in einem Blockschaltbild.

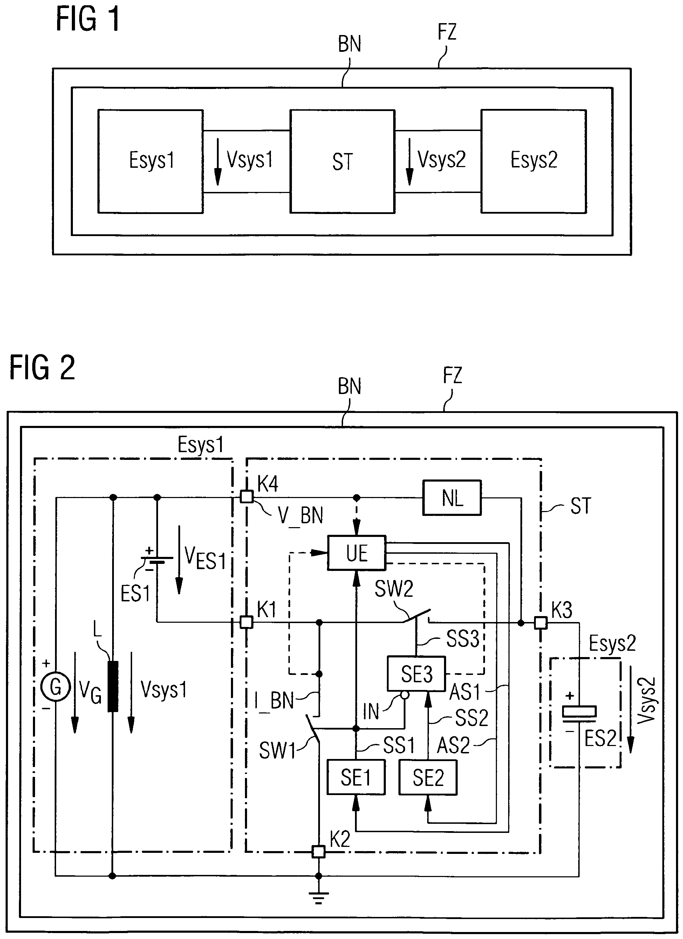

Das Fahrzeug FZ gemäß Figur 1 umfasst ein Bordnetz BN mit einem ersten und einem zweiten Energiesystem Esys1 und Esys2, sowie einer Steuervorrichtung ST zum Steuern von Stromfluss in den jeweiligen Energiesystemen Esys1, Esys2 bzw. zwischen den beiden Energiesystemen Esys1, Esys2.

Die beiden Energiesysteme Esys1, Esys2 sind voneinander nicht potentialgetrennt und weisen unterschiedliche Systemspannungen V**sys1**, V**sys2** auf, wobei vorzugsweise die Systemspannung V**sys1** des ersten Energiesystems Esys1 größer als die Systemspannung V**sys2** des zweiten Energiesystems Esys2 ist.

Es sei nun auf Figur 2 verwiesen, in der das Bordnetz von Figur 1 ausführlicher dargestellt ist. Wie in Figur 2 zu sehen ist, umfasst das erste Energiesystem Esys1 einen Generator G als erste Energie- bzw. Stromquelle und einen ersten Energiespeicher ES1, bspw. eine Batterie als zweite Energie- bzw. Stromquelle.

Ferner umfasst das erste Energiesystem Esys1 eine Gruppe von Energie- bzw. Stromverbrauchern, welche zusammengefasst als Systemlast L bezeichnet werden.

Der als Drehstrommaschine mit nachgeschalteter Gleichrichterschaltung ausgebildete Generator G lädt die Batterie ES1 mit Strom auf. In einem nominalen Betriebszustand im Bordnetz BN, in dem der Strombedarf bei der Systemlast L stabil und unter dem vom Generator G bereitgestellten Stromangebot bleibt, wird die Systemlast L allein von dem Generator G mit Strom versorgt.

Der erste Energiespeicher ES1 hat die Aufgabe, Spannungsschwankungen im Bordnetz BN, welche durch Veränderung des Strombedarfs durch Hinzuschalten von weiteren Stromverbrauchern im Bordnetz BN hervorgerufen werden, zu kompensieren.

Das zweite Energiesystem Esys2 umfasst einen zweiten bspw. als Doppelschichtkondensator ausgeführten Energiespeicher ES2.

Als dritte Energie- bzw. Stromquelle dient der zweite Energiespeicher ES2 dazu, in den Fällen, in denen der Strombedarf durch die dem Bordnetz zugeschalteten leistungsstarken Stromverbraucher über die Belastungsgrenze des Generators G und des ersten Energiespeichers ES1 hinaus ansteigt, dem Bordnetz mit Strom zu versorgen.

Die Steuervorrichtung ST weist vier elektrische Anschlüsse K1, K2, K3, K4 auf, welche zur Herstellung von elektrischen Verbindungen von der Steuervorrichtung ST zum Bordnetz BN, bzw. zu den beiden Energiesystemen Esys1, Esys2, dienen.

Über den ersten elektrischen Anschluss K1 ist die Steuervorrichtung ST mit dem Minuspol des ersten Energiespeichers ES1 elektrisch verbunden.

Über den zweiten elektrischen Anschluss K2 ist die Steuervorrichtung ST mit dem Minuspol des zweiten Energiespeichers ES2, mit dem Minuspol des in den Figuren nicht näher dargestellten Gleichrichters des Generators G mit der Systemlast L sowie mit elektrischer Masse elektrisch verbunden.

Über den dritten elektrischen Anschluss K3 ist die Steuervorrichtung ST mit dem Pluspol des zweiten Energiespeichers ES2 elektrisch verbunden.

Über den vierten elektrischen Anschluss ist die Steuervorrichtung ST mit dem Pluspol des ersten Energiespeichers, dem Pluspol des Gleichrichters des Generators G sowie mit der Systemlast L elektrisch verbunden. Zwischen dem vierten Anschluss K4 und elektrischer Masse liegt die Bordnetzspannung V_BN an.

Die Steuervorrichtung ST umfasst ferner einen ersten steuerbaren Schalter SW1 und einen zweiten steuerbaren Schalter SW2 sowie eine erste Steuereinheit SE1, eine zweite Steuereinheit SE2 und eine dritte Steuereinheit SE3 zum Steuern des ersten und des zweiten Schalters SW1 und SW2.

Die beiden Schalter SW1 und SW2 sind bspw. als Halbleiterschalter oder elektromechanische Schalter mit jeweils einem Steueranschluss und selbstsperrend, also beim Anliegen eines Steuersignals am Steueranschluss mit einem Signalpegel von logisch EINS leitend und beim Wegfall des Steuersignals oder beim Anliegen eines Steuersignals mit einem Signalpegel von logisch NULL sperrend, ausgeführt.

Der erste Schalter SW1 ist zwischen dem ersten Anschluss K1 und dem zweiten Anschluss K2 angeordnet und verbindet in einem geschlossenen Schaltzustand den ersten und den zweiten Anschluss K1 und K2 elektrisch miteinander. Somit verbindet der erste Schalter SW1 in einem geschlossenen Schaltzustand den ersten Energiespeicher ES1 mit der Systemlast L elektrisch und stellt so einen ersten geschlossenen Strompfad vom ersten Energiespeicher ES1 zur Systemlast L her.

Der zweite Schalter SW2 ist zwischen dem ersten und dem dritten Anschluss K1, K3 angeordnet und verbindet in einem geschlossenen Schaltzustand den ersten und den dritten Anschluss K1 und K3 miteinander. Damit verbindet der zweite Schalter SW2 in einem geschlossenen Schaltzustand und bei gleichzeitig geöffnetem erstem Schalter SW1 den zweiten Energiespeicher ES2 mit dem ersten Energiespeicher ES1 sowie mit der Systemlast L elektrisch und stellt so einen zweiten geschlossenen Strompfad vom ersten Energiespeicher ES1 zum zweiten Energiespeicher ES2 und zur Systemlast L her.

Die erste und die zweite Steuereinheit SE1 und SE2 weisen jeweils einen Signaleingang und einen Signalausgang auf und sind als Gleichspannungswandler ausgeführt.

Die dritte Steuereinheit SE3 ist als ein Oder-Gatter mit zwei Eingängen und einem Ausgang ausgebildet.

Der Signalausgang der ersten Steuereinheit SE1 ist mit dem Steueranschluss des ersten Schalters SW1 und dem ersten Signaleingang der dritten Steuereinheit SE3 elektrisch verbunden, wobei zwischen dem Signalausgang der ersten Steuereinheit SE1 und dem Signaleingang der dritten Steuereinheit SE3 ein Inverter IN zwischengeschaltet ist, der das Ausgangssignal der ersten Steuereinheit SE1 stets invertiert an die dritte Steuereinheit SE3 weiterleitet.

Der Signalausgang der zweiten Steuereinheit SE2 ist unmittelbar mit dem zweiten Signaleingang der dritten Steuereinheit SE3 elektrisch verbunden.

Der Signalausgang der dritten Steuereinheit SE3 ist unmittelbar mit dem Steueranschluss des zweiten Schalters SW2 elektrisch verbunden.

Die beiden Schalter SW1 und SW2 werden von der ersten Steuereinheit SE1 mit einem und demselben ersten Steuersignal SS1 zeitgleich angesteuert, wobei das erste Steuersignal SS1 von dem Inverter IN stets invertiert und über die dritte Steuereinheit SE3 an den zweiten Schalter SW2 weitergleitet wird.

So werden der erste und der zweite Schalter SW1 und SW2 von der ersten Steuereinheit SE1 stets zeitgleich aber gegensinnig angesteuert. Damit wird einer der beiden Schalter SW1 oder SW2 immer geschlossen bzw. geschlossen gehalten, während der andere Schalter SW2 oder SW1 geöffnet wird bzw. geöffnet bleibt.

Durch zeitgleiches Öffnen des ersten Schalters SW1 und Schließen des zweiten Schalters SW2 mit demselben Steuersignal SS1 unterbricht die erste Steuereinheit SE1 den ersten Strompfad vom ersten Energiespeicher ES1 zur Systemlast L und gleichzeitig stellt sie einen zweiten geschlossen Strompfad vom ersten Energiespeicher ES1 über den zweiten Energiespeicher ES2 zur Systemlast L her oder umgekehrt.

Neben der ersten Steuereinheit SE1 wird der zweite Schalter SW2 auch von der zweiten Steuereinheit SE2 mit einem zweiten Steuersignal SS2 gesteuert, wobei dieses zweite Steuersignal SS2 wie das erste Steuersignal SS1 der ersten Steuereinheit SE1 von der dritten Steuereinheit SE3 abhängig vom dessen Signalpegel an den Steueranschluss des zweiten Schalters SW2 weitergeleitet wird.

Also liegt an einem der beiden Eingänge der dritten Steuereinheit SE3 ein positives Steuersignal, bzw. mit einem Signalpegel von logisch EINS, so leitet die dritte Steuereinheit SE3 das positive Steuersignal an den zweiten Schalter SW2 weiter.

Liegen an beiden Eingängen nur negative Signale mit einem Signalpegel von logisch NULL oder nur positive Steuersignale, so wird eins der beiden Steuersignale an den zweiten Schalter SW2 weitergeleitet, wobei es unwesentlich ist, welches der beiden Signale genau weitergleitet wird, da die beiden Signale den gleichen Signalpegel (logisch EINS) aufweisen und daher bei dem zweiten Schalter SW2 gleich wirken.

Die Steuervorrichtung ST umfasst ferner eine Überwachungseinheit ÜE zum Überwachen des Systemzustands des ersten Strompfades des Bordnetzes, insb. des Schaltzustands bzw. der Funktionalität des ersten Schalters SW1 in diesem Strompfad, sowie eine Nachladeeinheit NL zum Nachladen des zweiten Energiespeichers ES2 mit Strom von dem Generator G und/oder dem ersten Energiespeicher ES1.

Die Überwachungseinheit ÜE erfasst am vierten Anschluss K4 ein Spannungspotential, welches bezogen auf das Massepotential die Bordnetzspannung V_BN bildet. Im geschlossenen ersten Strompfad ist diese Bordnetzspannung V_BN die Systemspannung Vsys1 des ersten Energiesystems Esys1.

Diese Bordnetzspannung V_BN erfasst die Überwachungseinheit ÜE als ersten Bordnetzparameterwert und vergleicht diesen mit einem vorab berechnet in einer in den Figuren nicht näher dargestellten Speichereinheit der Steuervorrichtung ST abgespeicherten Spannungsschwellwert TH1.

Abhängig von dem Vergleichsergebnis gibt die Überwachungseinheit ÜE ein Ausgangssignal AS2 mit einem dem Vergleichsergebnis entsprechenden Signalpegel an die zweite Steuereinheit SE2 aus.

Ist die aktuell erfasste Bordnetzspannung bzw. der aktuell erfasste Bordnetzspannungswert V_BN höher oder gleich der erste Schwellwert TH1, so gibt die Überwachungseinheit ÜE ein Ausgangssignal AS2 mit einem Signalpegel von 0V, also ein Signal mit logisch NULL, aus.

Sobald aber der aktuell erfasste Bordnetzspannungswert V_BN den ersten Schwellwert TH1 unterschreitet, gibt die Überwachungseinheit ÜE ein Ausgangssignal AS2 mit einem Signalpegel von 5V, also ein Signal mit logisch EINS, aus.

Erhält die zweite Steuereinheit SE2 ein Ausgangssignal AS2 von der Überwachungseinheit ÜE mit einem Signalpegel von logisch NULL, so setzt diese das zweite Steuersignal SS2 auf einen Signalpegel von logisch NULL und gibt dieses Signal SS2 an die dritte Steuereinheit SE3 aus.

Erhält die zweite Steuereinheit SE2 aber ein Ausgangssignal AS2 mit einem Signalpegel logisch EINS, so setzt diese das zweite Steuersignal SS2 auf logisch EINS und gibt dieses Signal SS2 an die dritte Steuereinheit SE3 aus.

In einer weiterführenden Ausführungform erfasst die Überwachungseinheit ÜE zwischen dem ersten und dem zweiten Anschluss K1 und K2 noch einen Stromwert also Strompegel I_BN, welcher den Pegel des Bordnetzstroms widerspiegelt. Diesen Strompegel I_BN erfasst die Überwachungseinheit ÜE als zweiten Bordnetzparameterwert und vergleicht diesen mit einem ebenfalls vorab berechnet in der Speichereinheit der Steuervorrichtung ST abgespeicherten Stromschwellwert TH2.

Abhängig von den beiden Vergleichsergebnissen gibt die Überwachungseinheit ÜE die beiden Ausgangssignale AS1, AS2 mit jeweils einem den Vergleichsergebnissen entsprechenden Signalpegel an die erste und die zweite Steuereinheit SE1 und SE2 aus.

Ist der aktuell erfasste Bordnetzspannungswert V_BN höher oder gleich dem Spannungsschwellwert TH1, und zugleich ist der aktuell erfasste Strompegel I_BN kleiner oder gleich dem Stromschwellwert TH2, so setzt die Überwachungseinheit ÜE das erste Ausgangssignal AS1 auf einen Signalpegel von 5V bzw. logisch EINS und das zweite Ausgangssignal AS2 auf einen Signalpegel von 0V bzw. logisch NULL und gibt diese beiden Signale AS1, AS2 an die erste und die zweite Steuereinheit SE1, SE2 aus.

Unterschreitet der aktuell erfasste Bordnetzspannungswert V_BN den ersten Schwellwert TH1, und zugleich überschreitet der aktuell erfasste Strompegel I_BN den Stromschwellwert TH2, so setzt die Überwachungseinheit ÜE das erste Ausgangssignal AS1 auf einen Signalpegel von 0V, also logisch NULL.

Unterschreitet der aktuell erfasste Bordnetzspannungswert V_BN den ersten Schwellwert TH1, bleibt der aktuell erfasste Strompegel I_BN aber weiterhin kleiner oder gleich dem Stromschwellwert TH2, so setzt die Überwachungseinheit ÜE das zweite Ausgangssignal AS2 auf einen Signalpegel von 1V, also logisch EINS.

Erhält die erste Steuereinheit SE1 von der Überwachungseinheit ÜE das erste Ausgangssignal AS1 mit einem Signalpegel von logisch EINS, so setzt diese das erste Steuersignal SS1 auf einen Signalpegel von logisch EINS und schließt so den ersten Schalter SW1 bzw. hält den ersten Schalter SW1 in einem geschlossenen Schaltzustand. Von dem zwischengeschalteten Inverter IN invertiert wird dieses erste Steuersignal SS1 von der dritten Steuereinheit SE3 mit einem Signalpegel von logisch NULL erhalten.

Erhält die erste Steuereinheit SE1 von der Überwachungseinheit ÜE das erste Ausgangssignal AS1 mit einem Signalpegel von logisch NULL, so setzt diese das erste Steuersignal SS1 auf einen Signalpegel von logisch NULL und öffnet so den ersten Schalter SW1 bzw. hält den ersten Schalter SW1 in einem geöffneten Schaltzustand. Dieses Signal SS1 wird nun vom Inverter IN invertiert mit einem Signalpegel von logisch EINS von der dritten Steuereinheit SE3 erhalten.

Erhält die zweite Steuereinheit SE2 von der Überwachungseinheit ÜE das zweite Ausgangssignal AS2 mit einem Signalpegel von logisch NULL, so setzt diese das zweite Steuersignal SS2 auf einen Signalpegel von logisch NULL und gibt dieses Signals SS2 an die dritte Steuereinheit SE3 aus.

Erhält die zweite Steuereinheit SE2 aber ein Ausgangssignal AS2 mit einem Signalpegel logisch EINS, so setzt diese das zweite Steuersignal SS2 auf logisch EINS und gibt dieses Signals SS2 an die dritte Steuereinheit SE3 aus.

Erhält die dritte Steuereinheit SE3 an beiden Signaleingängen die beiden Steuersignale SS1 und SS2 mit logisch NULL, so leitet diese eins der beiden Steuersignale SS1 und SS2 an den zweiten Schalter SW2 weiter. Folglich wird der zweite Schalter SW2 geöffnet bzw. in einem geöffneten Schaltzustand gehalten.

Erhält die die dritte Steuereinheit SE3 an einem der beiden Signaleingänge ein Steuersignal SS1 oder SS2 mit logisch EINS, so leitet diese dieses Steuersignal SS1 oder SS2 an den zweiten Schalter SW2 weiter. Folglich wird der zweite Schalter SW2 geschlossen bzw. in einem geschlossenen Schaltzustand gehalten.

Erhält die dritte Steuereinheit SE3 an beiden Signaleingängen die beiden Steuersignale SS1 und SS2 mit logisch EINS, so leitet diese eins der beiden Steuersignale SS1 und SS2 an den zweiten Schalter SW2 weiter. Folglich wird der zweite Schalter SW2 geschlossen bzw. in einem geschlossenen Schaltzustand gehalten. In diesem Fall, ist unerheblich, welches der beiden Steuersignale SS1 und SS2 genau an den zweiten Schalter SW2 weitergeleitet wird, da die beiden Steuersignale SS1 und SS2 in diesem Fall bezogen auf den zweien Schalter SW2 die gleiche Wirkung haben.

Optional erhält die Überwachungseinheit ÜE Informationen über den Soll-Schaltzustand des ersten Schalters SW1 und/oder des zweiten Schalters SW2 von der ersten Steuereinheit SE1, indem diese das erste Steuersignal SS1 der ersten Steuereinheit SE1 auch abfragt. Basierend auf diese Informationen überprüft diese im Falle eines Spannungsabfalls bei der Bordnetzspannung V_BN in erster Linie, ob der Sollschaltzustand des ersten Schalters SW1 "geschlossen" ist. Ist dies nicht der Fall, also hat das erste Steuersignal SS1 den Signalpegel von logisch NULL, so setzt die Überwachungseinheit ÜE den Signalpegel des ersten Ausgangssignals AS1 auf logisch EINS und schließt so über die erste Steuereinheit SE1 den ersten Schalter SW1.

Nun wird die Funktionsweise der Steuervorrichtung ST näher beschrieben:
In einem Systemausgangszustand, in dem der Strombedarf durch die Systemlast L weitgehend stabil unter dem vom Generator G bereitgestellten Stromangebot bleibt, wird das Bordnetz BN bzw. die Systemlast L allein durch den Generator G mit Strom versorgt. In diesem Ausgangszustand liegen keine Steuersignale (bzw. mit einem Signalpegel von logisch NULL) an den Steueranschlüssen der beiden Schalter SW1, SW2 und somit sind die beiden selbstsperrend ausgeführten Schalter SW1, SW2 geöffnet. In diesem Fall wird die dritte Steuereinheit SE3 von der Überwachungseinheit ÜE ausgeschaltet. Die beiden Ausgangssignale AS1, AS2 haben in diesem Zustand einen Signalpegel von logisch NULL. In diesem Ausgangszustand liegt die am Anschluss K4 erfasste Bordnetzspannung V_BN über den Spannungsschwellwert TH1.

Schwankt jedoch der Strombedarf im Bordnetz BN durch Zuschalten von zusätzlichen Stromverbrauchern, wodurch die Systemlast L vergrößert wird, und kann der Generator G allein den Strombedarf durch die Systemlast L nicht abdecken, so sinkt die Bordnetzspannung V_BN unter den Spannungsschwellwert TH1.

Wird ein derartiger Spannungsabfall bei der Bordnetzspannung V_BN von der Überwachungseinheit ÜE durch Vergleich mit dem Spannungsschwellwert TH1 erfasst, so fragt diese die erste Steuereinheit SE1 ab, ob der Sollschaltzustand des ersten Schalters SW1 "geschlossen" ist.

Ist der Signalpegel des ersten Steuersignals SS1 logisch NULL und deutet somit auf einen "geöffneten" Sollschaltzustand des ersten Schalters SW1 hin, so setzt die Überwachungseinheit ÜE das erste Ausgangssignal AS1 auf einen Signalpegel von logisch EINS und schaltet die dritte Steuereinheit SE3 durch Ausgabe eines Signals an diese zugleich ein.

Die erste Steuereinheit SE1 setzt dann den Signalpegel des ersten Steuersignals SS1 auf logisch EINS und schließt so den ersten Schalter SW1. Folglich wird der erste Energiespeicher ES1 zur Unterstützung des Generators G an das Bordnetz BN angeschlossen. Durch Schließen des ersten Schalters SW1 wird so der erste geschlossene Strompfad vom ersten Energiespeicher ES1 über den ersten Schalter SW1 zur Systemlast L gebildet.

Da dieses erste Steuersignal SS1 von dem zwischen geschalteten Inverter IN invertiert über die dritte Steuereinheit SE3 an den zweiten Schalter SW2 weitergeleitet wird, kommt dieses erste Steuersignal SS1 beim zweiten Schalter SW2 mit einem Signalpegel von logisch NULL an. Folglich wird der zweite Schalter SW2 geöffnet bzw. in einem geöffneten Schaltzustand gehalten.

Werden ein oder mehrere leistungsstarke Stromverbraucher, wie z. B. ein Anlasser, dem Bordnetz BN zugeschaltet, so steigt der Strombedarf im Bordnetz BN sprungartig über den vom Generator G und vom ersten Energiespeicher ES1 zur Verfügung stellbaren Strompegel an. In diesem Fall können der Generator G und der erste Energiespeicher ES1 den Strombedarf im Bordnetz BN allein nicht bewältigen und die Bordnetzspannung BN fällt wieder ab. Dieser Anstieg des Strombedarfs bzw. Abfall der Bordnetzspannung wird von der Überwachungseinheit ÜE durch Vergleichen der erfassten Bordnetzspannung V_BN mit dem Spannungsschwellwert TH1und durch Vergleichen des Strompegels I_BN mit dem Stromschwellwert TH2 erkannt. Unterschreitet der aktuell erfasste Bordnetzspannungswert V_BN den ersten Schwellwert TH1 und zugleich überschreitet der aktuell erfasste Strompegel I_BN den Stromschwellwert TH2, und hat das erste Steuersignal SS1den Signalpegel von logisch EINS und deutet somit auf einen "geschlossenen" Sollschaltzustand des ersten Schalters SW1 hin, so setzt die Überwachungseinheit ÜE das erste Ausgangssignal AS1 auf einen Signalpegel von 0V, also ein Signal mit logisch NULL. Erhält die erste Steuereinheit SE1 das erste Ausgangssignal AS1 mit einem Signalpegel von logisch NULL, so setzt diese das erste Steuersignal auf logisch NULL. Folglich wird der erste Schalter SW1 geöffnet und der zweite Schalter SW2, der von dem invertierten ersten Steuersignals SS1 gesteuert wird, geschossen.

Bricht aufgrund des unkontrolliert geöffneten ersten Schalters SW1 die Stromversorgung der Systemlast L durch den ersten Energiespeicher ES1 weg, so übersteigt der Strombedarf das zur Verfügung stehende Stromangebot durch den Generator G und fällt demzufolge die Bordnetzspannung V_BN ab. Da der Strompfad vom ersten Energiespeicher ES1 zur Systemlast L durch den unkontrolliert geöffneten ersten Schalter SW1 unterbrochen wurde, steigt der Strom zwischen dem ersten und dem zweiten Anschluss K1 und K2 nicht an. Folglich unterschreitet der aktuell erfasste Bordnetzspannungswert V_BN den ersten Schwellwert TH1, bleibt der aktuell erfasste Strompegel I_BN aber weiterhin unter dem Stromschwellwert TH2. Anhand dieser beiden Vergleichsergebnisse erkenn die Überwachungseinheit ÜE Eintreten eines Systemfehlers und setzt das zweite Ausgangssignal AS2 auf einen Signalpegel von logisch EINS.

Erhält die zweite Steuereinheit SE2 das zweite Ausgangssignal AS2 mit einem Signalpegel von logisch EINS, so setzt diese das zweite Steuersignal SS2 auf logisch EINS. Dieses zweite Steuersignal SS2 mit dem Signalpegel von logisch EINS wird nun von der dritten Steuereinheit SE3 an den zweiten Schalter SW2 weitergeleitet. Folglich wird der zweite Schalter SW2 unabhängig vom ersten Steuersignal SW1 und somit unabhängig vom Sollschaltzustand des ersten Schalters SW1 geschossen.

Vorzugsweise gibt die Überwachungseinheit ÜE noch eine Fehlermeldung über diesen erkannten Fehler an einen Bordcomputer des Fahrzeugs FZ aus. Der Bordcomputer informiert seinerseits den Fahrer mittels eines akustischen oder optischen Warnsignals oder das Servicepersonal vom Fahrzeughersteller über Vorliegen eines Systemfehlers, wenn das Servicepersonal im Rahmen einer Fahrzeugwartung die abgespeicherten Fehlermeldungen vom Bordcomputer abliest.

In einer weiteren Ausgestaltung kann die zweite Steuereinheit SE2 eingespart bzw. weggelassen werden, wobei in einem derartigen Fall das Ausgangssignal AS2 der Überwachungseinheit ÜE dann direkt an die dritte Steuereinheit SE3 ausgegeben wird.

### Bezugszeichenliste

- FZ: Fahrzeug
- BN: Bordnetz
- Esys1: Erstes Energiesystem
- Esys2: Zweites Energiesystem
- ST: Steuervorrichtung
- G: Generator
- L: Systemlast
- ES1: Erste Energiespeicher, Batterie
- ES2: Zweite Energiespeicher, Doppelschichtkondensator
- SE1: Erste Steuereinheit
- SE2: Zweite Steuereinheit
- SE3: Dritte Steuereinheit, Oder-Gatter
- NL: Nachladeeinheit
- SW1: Erster Schalter
- SW2: Zweiter Schalter
- IN: Inverter
- SS1: Erstes Steuersignal der ersten Steuereinheit SE1
- SS2: Zweites Steuersignal der zweiten Steuereinheit SE2
- SS3: Ausgangssignal der dritten Steuereinheit SE3
- AS1, AS2: Erstes und zweites Ausgangssignal der Überwachungseinheit ÜE

## Patentansprüche

1. Bordnetz (BN) für ein Fahrzeug (FZ), mit folgenden Merkmalen:
- einem ersten Strompfad, umfassend:
• eine Systemlast (L) mit zumindest einem Stromverbraucher,
• einen ersten Energiespeicher (ES1) zum Bereitstellen von elektrischer Energie,
• einen ersten steuerbaren Schalter (SW1), welcher in einem geschlossenen Schaltzustand die Systemlast (L) mit dem ersten Energiespeicher (ES1) elektrisch verbindet,
- einem zweiten Strompfad, umfassend:
• die Systemlast (L),
• den ersten (ES1) und einen zweiten Energiespeicher (ES2) zum Bereitstellen von elektrischer Energie,
• einen zweiten steuerbaren Schalter (SW2), welcher in einem geschlossenen Schaltzustand die Systemlast (L) mit dem ersten (ES1) und dem zweiten Energiespeicher (ES2) elektrisch verbindet,
- einer Steuervorrichtung (ST) mit
• einer Überwachungseinheit (ÜE) zum Erfassen einer Bordnetzspannung als einen ersten Bordnetzparameterwert (V_BN) und zum Vergleichen des aktuell erfassten ersten Bordnetzparameterwertes (V_BN) mit einem ersten vorgegebenen Schwellwert (TH1),
• einer ersten Steuereinheit (SE1) zum Schließen des zweiten Schalters (SW2) bzw. Halten des zweiten Schalters (SW2) in einem geschlossenen Schaltzustand in Abhängigkeit von dem aktuell erfassten ersten Bordnetzparameterwert (V_BN) im Vergleich mit dem ersten Schwellwert (TH1), **dadurch gekennzeichnet, dass** die erste Steuereinheit (SE1) ferner ausgeführt ist, den ersten (SW1) und zweiten (SW2) Schalter mit einem und demselben ersten Steuersignal (SS1) zeitgleich und zueinander gegensinnig anzusteuern.

2. Bordnetz (BN) nach Anspruch 1, wobei
- die Überwachungseinheit (ÜE) ferner zum Erfassen eines Bordnetzstroms als einen zweiten Bordnetzparameterwert (I_BN) und zum Vergleichen des aktuell erfassten, zweiten Bordnetzparameterwertes (I_BN) mit einem zweiten vorgegebenen Schwellwert (TH2) ausgeführt ist, und
- die erste Steuereinheit (SE1) ferner zum Schließen des zweiten Schalters (SW2) bzw. Halten des zweiten Schalters (SW2) in einem geschlossenen Schaltzustand in Abhängigkeit von dem aktuell erfassten, zweiten Bordnetzparameterwert (I_BN) im Vergleich mit dem zweiten Schwellwert (TH2) ausgeführt ist.

3. Bordnetz (BN) nach Anspruch 1 oder 2, wobei die Steuervorrichtung (ST) in der Signalleitung zwischen der ersten Steuereinheit (SE1) und einem der beiden Schalter (SW2) einen Inverter (IN) aufweist, der ausgeführt ist, das erste Steuersignal (SS1) von der ersten Steuereinheit (SE1) invertiert an den einen Schalter (SW2) weiterzuleiten.

4. Bordnetz (BN) nach einem der vorangehenden Ansprüche, mit einer zweiten Steuereinheit (SE2), die ausgeführt ist, in Abhängigkeit von dem aktuell erfassten ersten Bordnetzparameterwert (V_BN) im Vergleich mit dem ersten Schwellwert (TH1) und/oder in Abhängigkeit von dem aktuell erfassten zweiten Bordnetzparameterwert (I_BN) im Vergleich mit dem zweiten Schwellwert (TH2) mit einem zweiten Steuersignal (SS2) den zweiten Schalter (SW2) unabhängig von dem ersten Steuersignal (SS1) der ersten Steuereinheit (SE1) zu schließen bzw. in einem geschlossenen Schaltzustand zu halten.

5. Bordnetz (BN) nach Anspruch 4, wobei die Steuervorrichtung (ST) eine dritte Steuereinheit (SE3) aufweist, wobei diese dritte Steuereinheit (SE3)
- zwischen dem zweiten Schalter (SW2) und den beiden ersten(SE1) und zweiten (SE2) Steuereinheiten zwischengeschaltet ist, und
- ausgeführt ist, in Abhängigkeit von dem aktuell erfassten ersten Bordnetzparameterwert (V_BN) im Vergleich mit dem ersten Schwellwert (TH1) und/oder in Abhängigkeit von dem aktuell erfassten zweiten Bordnetzparameterwert (I_BN) im Vergleich mit dem zweiten Schwellwert (TH2) das erste Steuersignal (SS1) oder das zweite Steuersignal (SS2) an den zweiten Schalter (SW2) weiterzuleiten.

6. Steuervorrichtung (ST) für ein Bordnetz (BN) eines Fahrzeugs (FZ), mit folgenden Merkmalen:
- einem ersten (K1), einem zweiten (K2), einem dritten (K3) und einem vierten (K4) elektrischen Anschluss zur Herstellung von elektrischen Verbindungen von der Steuervorrichtung (ST) zum Bordnetz (BN),
- einem ersten steuerbaren Schalter (SW1), der ausgeführt ist, in einem geschlossenen Schaltzustand den ersten (K1) und den zweiten (K2) Anschluss miteinander elektrisch zu verbinden,
- einem zweiten steuerbaren Schalter (SW2), der ausgeführt ist, in einem geschlossenen Schaltzustand den ersten (K1) und den dritten (K3) Anschluss miteinander elektrisch zu verbinden,
- einer Überwachungseinheit (ÜE) zum Erfassen einer Bordnetzspannung als einen ersten Bordnetzparameterwert (V_BN) über den vierten Anschluss (K4), und zum Vergleichen des aktuell erfassten ersten Bordnetzparameterwertes (V_BN) mit einem ersten vorgegebenen Schwellwert (TH1), und
- einer ersten Steuereinheit (SE1) zum Schließen des zweiten Schalters (SW2) bzw. Halten des zweiten Schalters (SW2) in einem geschlossenen Schaltzustand in Abhängigkeit von dem aktuell erfassten ersten Bordnetzparameterwert (V_BN) im Vergleich mit dem ersten Schwellwert (TH1),
- wobei die erste Steuereinheit (SE1) ferner ausgeführt ist, den ersten (SW1) und zweiten Schalter (SW2) mit einem und demselben ersten Steuersignal (SS1) zeitgleich und zueinander gegensinnig anzusteuern.

7. Fahrzeug (FZ), insb. Kraftfahrzeug, mit einem Bordnetz (BN) nach einem der Ansprüche 1 bis 5 oder einer Steuervorrichtung (ST) nach Anspruch 6.

## Claims

1. Onboard electrical system (BN) for a vehicle (FZ), having the following features:
- a first current path, comprising:
• a system load (L) having at least one current consumer,
• a first energy store (ES1) for supplying electric power,
• a first controllable switch (SW1), which, in a closed switching state, electrically connects the system load (L) to the first energy store (ES1),
- a second current path, comprising:
• the system load (L),
• the first (ES1) and a second (ES2) energy store for supplying electric power,
• a second controllable switch (SW2), which, in a closed switching state, electrically connects the system load (L) to the first (ES1) and the second (ES2) energy store,
- a control apparatus (ST) having
• a monitoring unit (ÜE) for determining an onboard electrical system voltage as a first onboard electrical system parameter value (V_BN) and for comparing the presently determined first onboard electrical system parameter value (V_BN) with a first prescribed threshold value (TH1),
• a first control unit (SE1) for closing the second switch (SW2) or keeping the second switch (SW2) in a closed switching state, respectively, depending on the presently determined first onboard electrical system parameter value (V_BN) in comparison with the first threshold value (TH1),
**characterized in that**
the first control unit (SE1) is further embodied to actuate the first (SW1) and second (SW2) switches simultaneously and in opposition to one another by using one and the same first control signal (SS1).

2. Onboard electrical system (BN) according to Claim 1, wherein
- the monitoring unit (ÜE) is further embodied to determine an onboard electrical system current as a second onboard electrical system parameter value (I_BN) and to compare the presently determined second onboard electrical system parameter value (I_BN) with a second prescribed threshold value (TH2), and
- the first control unit (SE1) is further embodied to close the second switch (SW2) or keep the second switch (SW2) in a closed switching state, respectively, depending on the presently determined second onboard electrical system parameter value (I_BN) in comparison with the second threshold value (TH2).

3. Onboard electrical system (BN) according to Claim 1 or 2, wherein the control apparatus (ST) has an inverter (IN) in the signal line between the first control unit (SE1) and one of the two switches (SW2), said inverter being embodied to forward the first control signal (SS1) in inverted form from the first control unit (SE1) to the one switch (SW2).

4. Onboard electrical system (BN) according to one of the preceding claims, having a second control unit (SE2), which is embodied to close the second switch (SW2) or to keep said switch in a closed switching state, respectively, depending on the presently determined first onboard electrical system parameter value (V_BN) in comparison with the first threshold value (TH1) and/or depending on the presently determined second onboard electrical system parameter value (I_BN) in comparison with the second threshold value (TH2) by using a second control signal (SS2), independently of the first control signal (SS1) of the first control unit (SE1).

5. Onboard electrical system (BN) according to Claim 4, wherein the control apparatus (ST) has a third control unit (SE3), wherein said third control unit (SE3)
- is interposed between the second switch (SW2) and the two first (SE1) and second (SE2) control units, and
- is embodied to forward the first control signal (SS1) or the second control signal (SS2) to the second switch (SW2) depending on the presently determined first onboard electrical system parameter value (V_BN) in comparison with the first threshold value (TH1) and/or depending on the presently determined second onboard electrical system parameter value (I_BN) in comparison with the second threshold value (TH2).

6. Control apparatus (ST) for an onboard electrical system (BN) of a vehicle (FZ), having the following features:
- a first (K1), a second (K2), a third (K3) and a fourth (K4) electrical terminal for establishing electrical connections from the control apparatus (ST) to the onboard electrical system (BN),
- a first controllable switch (SW1), which, in a closed switching state, is embodied to electrically connect the first (K1) and the second (K2) terminal to one another,
- a second controllable switch (SW2), which, in a closed switching state, is embodied to electrically connect the first (K1) and the third (K3) terminal to one another,
- a monitoring unit (ÜE) for determining an onboard electrical system voltage as a first onboard electrical system parameter value (V_BN) by means of the fourth terminal (K4), and for comparing the presently determined first onboard electrical system parameter value (V_BN) with a first prescribed threshold value (TH1), and
- a first control unit (SE1) for closing the second switch (SW2) or keeping the second switch (SW2) in a closed switching state, respectively, depending on the presently determined first onboard electrical system parameter value (V_BN) in comparison with the first threshold value (TH1),
- wherein the first control unit (SE1) is further embodied to actuate the first (SW1) and second (SW2) switches simultaneously and in opposition to one another by using one and the same first control signal (SS1).

7. Vehicle (FZ), in particular motor vehicle, having an onboard electrical system (BN) according to one of Claims 1 to 5 or a control apparatus (ST) according to Claim 6.

## Revendications

1. Réseau de bord (BN) destiné à un véhicule (FZ), comportant les éléments caractéristiques suivants :
- un premier trajet de courant, comprenant :
• une charge système (L) comportant au moins un consommateur de courant,
• un premier accumulateur d'énergie (ES1) pour fournir de l'énergie électrique,
• un premier commutateur pouvant être commandé (SW1) qui, dans un état fermé, relie électriquement la charge système (L) au premier accumulateur d'énergie (ES1),
- un deuxième trajet de courant, comprenant :
• la charge système (L),
• le premier accumulateur d'énergie (ES1) et un deuxième accumulateur d'énergie (ES1), pour fournir de l'énergie électrique,
• un deuxième commutateur pouvant être commandé (SW2) qui, dans un état fermé, relie électriquement la charge système (L) au premier accumulateur d'énergie (ES1) et au deuxième accumulateur d'énergie (ES2),
- un dispositif de commande (ST) comportant
• une unité de surveillance (UE) destinée à détecter une tension de réseau de bord en tant que première valeur de paramètre de réseau de bord (V_BN) et à comparer la première valeur de paramètre de réseau de bord détectée actuelle (V_BN) à une première valeur de seuil prédéterminée (TH1),
• une première unité de commande (SE1) destinée à fermer le deuxième commutateur (SW2) ou à maintenir le deuxième commutateur (SW2) dans un état de commutation fermé en fonction de la première valeur de paramètre de réseau de bord détectée actuelle (V_BN) par comparaison à la première valeur de seuil (TH1),
**caractérisé en ce que** la première unité de commande (SE1) est en outre conçue pour commander le premier commutateur (SW1) et le deuxième commutateur (SW2) simultanément et dans des sens mutuellement opposés au moyen d'un seul et même premier signal de commande (SS1).

2. Réseau de bord (BN) selon la revendication 1, dans lequel
- l'unité de surveillance (UE) est en outre conçue pour détecter un courant de réseau de bord en tant que deuxième valeur de paramètre de réseau de bord (I_BN) et à comparer la deuxième valeur de paramètre de réseau de bord détectée actuelle (I_BN) à une deuxième valeur de seuil prédéterminée (TH2), et
- la première unité de commande (SE1) est en outre conçue pour fermer le deuxième commutateur (SW2) ou pour maintenir le deuxième commutateur (SW2) dans un état de commutation fermé en fonction de la deuxième valeur de paramètre de réseau de bord détectée actuelle (I_BN) par comparaison à la deuxième valeur de seuil (TH2).

3. Réseau de bord (BN) selon la revendication 1 ou 2, dans lequel le dispositif de commande (ST) comporte un inverseur (IN) sur la ligne de signalisation entre la première unité de commande (SE1) et l'un des deux commutateurs (SW2), lequel inverseur est conçu pour réacheminer le premier signal de commande (SS1) de la première unité de commande (SE1) à l'état inversé vers ledit commutateur (SW2).

4. Réseau de bord (BN) selon l'une quelconque des revendications précédentes, comportant une deuxième unité de commande (SE2) qui est conçue pour fermer ou maintenir dans un état de commutation fermé le deuxième commutateur (SW2) indépendamment du premier signal de commande (SS1) de la première unité de commande (SE1) en fonction de la première valeur de paramètre de réseau de bord détectée actuelle (V_BN) par comparaison à la première valeur de seuil (TH1) et/ou en fonction de la deuxième valeur de paramètre de réseau de bord détectée actuelle (I_BN) par comparaison à la deuxième valeur de seuil (TH2) au moyen d'un deuxième signal de commande (SS2).

5. Réseau de bord (BN) selon la revendication 4, dans lequel le dispositif de commande (ST) comporte une troisième unité de commande (SE3), dans lequel ladite troisième unité de commande (SE3)
- est interconnectée entre le deuxième commutateur (SW2) et chacune des première (SE1) et deuxième (SE2) unités de commande, et
- est conçue pour réacheminer le premier signal de commande (SS1) ou le deuxième signal de commande (SS2) vers le deuxième commutateur (SW2) en fonction de la première valeur de paramètre de réseau de bord détectée actuelle (V_BN) par comparaison à la première valeur de seuil (TH1) et/ou en fonction de la deuxième valeur de paramètre de réseau de bord détectée actuelle (I_BN) par comparaison à la deuxième valeur de seuil (TH2).

6. Dispositif de commande (ST) destiné à un réseau de bord (BN) d'un véhicule (FZ), comportant les éléments caractéristiques suivants :
- des première (K1), deuxième (K2), troisième (K3) et quatrième (K4) bornes électriques destinées à établir des liaisons électriques du dispositif de commande (ST) au réseau de bord (BN),
- un premier commutateur pouvant être commandé (SW1) qui est conçu, dans un état de commutation fermé, pour relier électriquement l'une à l'autre les première (K1) et deuxième (K2) bornes,
- un deuxième commutateur pouvant être commandé (SW2) qui est conçu, dans un état de commutation fermé, pour relier électriquement l'une à l'autre les première (K1) et troisième (K3) bornes,
- une unité de surveillance (UE) destinée à détecter une tension de réseau de bord en tant que première valeur de paramètre de réseau de bord (V_BN) par l'intermédiaire de la quatrième borne (K4), et pour comparer la première valeur de paramètre de réseau de bord détectée actuelle (V_BN) à une première valeur de seuil prédéterminée (TH1), et
- une première unité de commande (SE1) destinée à fermer le deuxième commutateur (SW2) ou à maintenir le deuxième commutateur (SW2) dans un état de commutation fermé en fonction de la première valeur de paramètre de réseau de bord détectée actuelle (V_BN) par comparaison à la première valeur de seuil (TH1),
dans lequel la première unité de commande (SE1) est en outre conçue pour commander les premier (SW1) et deuxième (SW2) commutateurs simultanément et dans des sens mutuellement opposés au moyen d'un seul et même signal de commande (SS1).

7. Véhicule (FZ), notamment véhicule automobile, comportant un réseau de bord (BN) selon l'une quelconque des revendications 1 à 5 ou un dispositif de commande (ST) selon la revendication 6.
